# EUROPÄISCHE PATENTSCHRIFT

(11) **EP 2 664 216 B1**
(45) Veröffentlichungstag und Bekanntmachung des Hinweises auf die Patenterteilung: **03.08.2016**
(21) Anmeldenummer: 12702404.0
(22) Anmeldetag: 05.01.2012
(51) Int. Cl.: A47J 36/24, H05B 6/06, H05B 6/12

(54) **MODULARES SYSTEM ZUM WARMHALTEN VON SPEISEN**
MODULAR SYSTEM FOR KEEPING FOOD WARM
SYSTÈME MODULAIRE DE MAINTIEN AU CHAUD DE PLATS

(30) Priorität: 14.01.2011 CH 64112011
(43) Veröffentlichungstag der Anmeldung: 20.11.2013
(73) Patentinhaber: Inducs A.G., 9100 Herisau (CH)
(72) Erfinder: FUCHS, Christian, CH-8180 Bülach (CH)
(74) Vertreter: Frei Patent Attorneys
(86) Internationale Anmeldenummer: PCT/CH2012/000003
(87) Internationale Veröffentlichungsnummer: WO 2012/094770

(56) Entgegenhaltungen:
- WO-A1-2010/112009
- DE-A1- 3 610 196
- DE-U1- 29 620 603
- JP-A- 2002 355 129
- US-A- 4 910 372

## Beschreibung

Die Erfindung liegt auf dem Gebiet der Warmhaltesysteme zum Warmhalten von Speisen, insbesondere für die Gastronomie und für Grossküchen. Solche Warmhaltesysteme werden beispielsweise bei Selbstbedienungs-Buffets eingesetzt.

### STAND DER TECHNIK

An Warmhaltesysteme werden besondere Anforderungen gestellt, damit die Qualität der darin warm gehaltenen Speisen über einen bestimmten Zeitraum erhalten bleibt. So ist es beispielsweise erforderlich, dass die Temperatur über eine längere Zeit auf einem bestimmten Warmhalteniveau konstant gehalten werden kann. Ferner ist es auch wichtig, dass die Speisen gleichmässig warm gehalten werden. Daher sollen z. B. nicht nur der Boden sondern auch die Seitenwände der Behältnisse, in welchen die Speisen warm gehalten werden, gleichmässig erwärmt werden. Daher eignen sich z. B. bekannte Lösungen, wie sie beim Kochen mit Erfolg Einsatz finden, bei welchen eine Platte erwärmt wird, die ihrerseits ein auf dieser Platte platziertes Geschirr über Wärmeleitung erwärmt, nicht besonders gut. Bei diesen Lösungen wird zwar der Boden des Geschirrs erwärmt, die Seitenwände werden jedoch nur über Wärmeleitung innerhalb des Geschirrs erwärmt und weisen daher immer eine wesentliche tiefere Temperatur auf als der Boden des Geschirrs.

Im Stand der Technik sind Warmhaltesysteme bekannt, welche eine Einrichtung, mit einem oder mehreren unabhängigen Warmhaltebecken umfassen. Die Warmhaltebecken beinhalten jeweils Wasser, welches z. B. über Heizschlagen oder Heizplatten aufgewärmt wird. In die einzelnen Warmhaltebecken sind nun Warmhaltewannen, z. B. aus Stahl, einsetzbar, welche die Speisen aufnehmen. Durch das Aufwärmen des Wassers wird Wasserdampf erzeugt, welcher die Wannen umgibt und diese erwärmt. Auf diese Weise werden sowohl der Boden als auch die Seitenwände durch den umgebenden Wasserdampf erwärmt. Das beschriebene Warmhaltesystem weist jedoch einige Nachteile auf. So führt das indirekte Wärmen der Wannen über das Medium Wasserdampf zu vergleichsweise hohen Energieverlusten. Ferner ist das System als solches unflexibel und konstruktiv aufwändig. Solche Systeme weisen in der Regel eine von Anfang an fest angelegte Anzahl von Warmhaltewannen auf. Ein Nachrüsten der Einrichtung mit weiteren Warmhaltebecken ist nicht möglich. Daher ist bei der Beschaffung einer solchen Einrichtung stets darauf zu achten, dass diese eine genügend hohe Kapazität aufweist. Benötigt man jedoch im Gebrauch nicht sämtliche Warmhaltebecken, so können diese zwar leer gelassen werden, eine Platzeinsparung aufgrund des reduzierten Betriebs resultiert daraus jedoch nicht, da die Warmhaltebecken nicht von der Einrichtung abtrennbar sind. Im Übrigen weisen diese Systeme einen vergleichsweise komplexen und für das Personal unterhaltsintensiven Aufbau auf. So müssen die Warmhaltebecken nach jedem Gebrauch entleert und gereinigt werden. Ferner beinhaltet das System Heizschlangen bzw. Heizplatten sowie Zu- und Ableitungen für das Warmhaltewasser, welche ebenfalls regelmässig gewartet, z. B. entkalkt, werden müssen. Da immer zuerst das Wasser aufgewärmt werden muss, bevor die Warmhaltewannen mit den Speisen in die Becken eingesetzt werden können, dauert überdies die Inbetriebnahme des Systems verhältnismässig lange.

Die Veröffentlichungsschrift US 4 910 372 beschreibt ein Induktionswarmhaltegerät mit einem Warmhaltetisch, welcher mehrere Bedienbereiche aufweist. Jeder Bedienbereich enthält eine Vertiefung für ein Induktionswarmhaltemodul.

Die Veröffentlichungsschrift DE-U-296 20 603 beschreibt einen Speise-Transportwagen mit einem Wagenkorpus, welcher vertikal voneinander beabstandet angeordnete Fachböden aufweist. Auf den Fachböden sind induktiv beheizbare Speisebehälter angeordnet.

### DARSTELLUNG DER ERFINDUNG

Es ist daher Aufgabe der vorliegenden Erfindung, ein Warmhaltesystem zu schaffen, welches vergleichsweise energieeffizient arbeitet, wenig Zeit für die Inbetriebnahme benötigt, sowie modular und erweiterungsfähig aufgebaut ist, so dass die Grösse des Systems benutzungsgerecht jeweils individuell angepasst werden kann.

Die Aufgabe wird durch das Warmhaltesystem nach Anspruch 1 sowie durch die dazugehörige Leistungs- und Steuerungseinheit nach Anspruch 9 sowie das dazugehörige Induktionswarmhaltegerät gemäss Anspruch 10 gelöst. Die abhängigen Ansprüche geben bevorzugte Ausführungsformen oder Weiterentwicklungen wieder. Merkmale der Leistungs- und Steuerungseinheit oder des Induktionswarmhaltegerätes, welche nur im Zusammenhang mit dem Warmhaltesystem offenbart worden sind, gelten auch für die unabhängig beanspruchte Leistungs- und Steuerungseinheit bzw. das unabhängig beanspruchte Induktionswarmhaltegerät und umgekehrt.

Das modulare Warmhaltesystem zum Warmhalten von Speisen, enthält erfindungsgemäss:
- eine Mehrzahl von Induktionswarmhaltegeräten, welche jeweils ein Warmhaltefeld ausbilden;
- eine gemeinsame Leistungs- und Steuerungseinheit mit einem Leistungssteller und mit einer Mehrzahl von Anschlussschnittstellen für den individuellen Anschluss und vorzugsweise auch die individuelle Ansteuerung der Induktionswarmhaltegeräte;

Die Induktionswarmhaltegeräte enthalten jeweils wenigstens eine Induktionsspule als Teil eines Induktionsschwingkreises zur Erzeugung eines magnetischen Wechselfeldes zwecks Erwärmung eines auf dem Warmhaltefeld platzierten Geschirrs. Das Warmhaltefeld eines Induktionswarmhaltegerätes kann eine, zwei oder mehrere Induktionsspulen als Teil eines Induktionsschwingkreises zur Erzeugung eines magnetischen Wechselfeldes zwecks Erwärmung eines auf dem Warmhaltefeld platzierten Geschirrs enthalten. Liegen mehrere Induktionsspulen vor, so sind diese parallel geschaltet. Ferner enthält die Leistungs- und Steuerungseinheit bevorzugt auch Steuerungsmittel zum individuellen Ansteuern der Induktionswarmhaltegeräte.

Die Leistungs- und Steuerungseinheit weist bevorzugt jeweils erste Anschlüsse für die individuelle Leistungsversorgung der Induktionswarmhaltegeräte über Versorgungsleitungen sowie zweite Anschlüsse für den individuellen Datenaustausch über Datenleitungen mit den Induktionswarmhaltegeräten auf. Leistungs- und Steuerungseinheit sowie die einzelnen Induktionswarmhaltegeräte sind also physisch getrennt bzw. unabhängig voneinander ausgebildet und z. B. nur über entsprechende Leitungen miteinander verbunden.

Die Induktionswarmhaltegeräte sind über entsprechende Leitungen z. B. sternförmig mit der zentralen Leistungs- und Steuerungseinheit verbunden. Die Leitungen können z. B. Verbindungskabel sein. Die Verbindungskabel und die dazugehörigen Anschlussschnittstellen sind bevorzugt zum lösbaren anbringen der Kabel ausgelegt. Dadurch können einzelne Geräte im Sinne der Modularität beliebig an die Leistungs- und Steuerungseinheit angeschlossen und von dieser wieder entfernt werden. In Bezug auf die Datenleitungen können diese auch drahtlos ausgebildet sein. Die Anschlussschnittstellen werden in diesem Fall durch Sende- und Empfangseinheiten dargestellt. Ferner sind bevorzugt Mittel zur automatischen Erkennung eines neu angeschlossenen Gerätes vorgesehen. Dies kann z. B. über entsprechende Programmmittel im bekannten "Plug & Play" Modus geschehen.

Das lnduktionswarmhaltegerät enthält ein Auflageelement mit einer Oberseite, welche als Auflagefläche für das Warmhaltegeschirr dient, und mit einer Unterseite, welche der der Induktionsspule zugewandt ist. Das Auflageelement besteht bevorzugt aus Keramik, Glas oder Glaskeramik, wie z. B. Ceran-Glas. Das Auflageelement ist bevorzugt plattenförmig ausgebildet. Das Induktionswarmhaltegerät enthält in bevorzugter Ausführung der Erfindung wenigstens einen, vorzugsweise eine Mehrzahl von in der Fläche des Warmhaltefeldes verteilten, jeweils der Unterseite des Auflageelementes zugewandten Temperatursensoren, welche die Temperatur des Auflageelementes an dessen Unterseite messen. Dies können z. B. Pt-Temperatursensoren, insbesondere Pt1000-Temperatursensoren sein. Die Leistungs- und Steuerungseinheit enthält bevorzugt entsprechende Auswertemittel zur Auswertung von Temperaturmessdaten der erwähnten Temperatursensoren. Die Auswertemittel können Teil der Steuerungsmittel sein. Die Steuerung der Warmhaltetemperaturen an den einzelnen Induktionswarmhaltegeräten wird weiter unten detailliert beschrieben. Die Induktionswarmhaltegeräte können ferner jeweils Mittel zum Erkennen eines Warmhaltegeschirrs auf dem Warmhaltefeld enthalten. Diese Mittel sind auf dem Gebiet der Induktionskochgeräte bekannt und werden daher nicht näher erläutert.

Das erfindungsgemässe Warmhaltesystem umfasst bevorzugt Mittel zur Steuerung bzw. Regelung der Temperatur der Speisen bzw. des dazugehörigen Warmhaltegeschirrs. Hierzu kann das Warmhaltesystem Temperatursensoren, wie oben beschrieben, enthalten. Gemäss einer bevorzugten Ausführung der Temperatursteuerung erfassen die Temperatursensoren fortlaufend oder periodisch Temperaturwerte von den Temperatursensoren und leiten diese den Auswertemittel weiter. Die Auswertemittel vergleichen die Messwerte mit hinterlegten Temperatursollwerten, welche den gewünschten Warmhaltetemperaturen entsprechen. Bei einer Abweichung der gemessenen Temperatur unterhalb des Sollwertes, wird über die Steuerungsmittel ein elektronische Schalter des dazugehörigen Warmhaltegerätes geschaltet, so dass der dazugehörige Induktionsschwingkreis mit Leistung versorgt wird und über das damit erzeugte magnetische Wechselfeld den im Warmhaltegeschirr gelagerten Speisen über das Warmhaltegeschirr Wärme zugeführt wird. Sobald die Temperatur genügend angehoben worden ist, wird die Leistungszufuhr durch erneute Schaltung des elektronischen Schalters wieder unterbrochen. Das Schalten der elektronischen Schalter kann in fast beliebigen diskreten Zeitabständen erfolgen. Je kürzer die Schaltabstände sind, desto geglätteter fällt der Temperaturverlauf des Warmhaltegeschirrs um den Sollwert aus. Der elektronische Schalter wird weiter unten näher erläutert.

Da die Temperatursensoren die Temperatur des Auflageelements an seiner Unterseite und nicht die Temperatur des Geschirrbodens direkt messen, hinkt aus bekannten Gründen die Temperaturantwort des Sensors bei einer Temperaturänderung gegenüber der effektiven Temperatur des Geschirrbodens hinterher. Dies stellt jedoch, im Gegensatz zu einem temperaturgesteuerten Kochvorgang, keine grosses Problem dar, da hier das primäre Ziel ist, die Temperatur des Geschirrs auf einem bestimmten Sollwert zu halten und häufige und markante Temperaturänderungen, mit Ausnahme der Inbetriebnahme der Warmhalteeinrichtung, in der Regel unerwünscht sind. Überdies kann die Verzögerung in der Temperaturantwort beim Temperatursensor über entsprechende Algorithmen regelungstechnisch berücksichtigt werden.

Es kann im Übrigen auch vorgesehen sein, dass die Temperatur des Warmhaltegeschirrs in bekannter Weise über eine Induktionsmessspule indirekt erfasst wird. Über eine Induktionsmessspule lässt sich bekanntlich die Resonanzfrequenz des induktiv angeregten Warmhaltegeschirrs ermitteln, welche wiederum in einer linearen Abhängigkeit zur Temperatur des Warmhaltegeschirrs steht. Wird nun die dieser linearen Abhängigkeit zugrunde liegende Funktion durch Temperatureichwerte definiert, so kann aus den ermittelten Resonanzfrequenzen direkt die aktuelle Temperatur des Warmhaltegeschirrs berechnet werden. Die Eichwerte können z. B. mittels den oben beschriebenen Temperatursensoren ermittelt werden. Dieses Verfahren ist aus dem Bereich der Induktionskochgeräte bereits bekannt und lässt sich hier entsprechend anwenden. Anstelle der oben genannten Temperaturmesswerte der Temperatursensoren werden den Auswertemitteln nun einfach die gemessenen Resonanzfrequenzen bzw. die daraus berechneten Temperaturwerte übermittelt.

Das oben beschriebene Verfahren kann auch im Zusammenhang mit einer HalteFunktion eingesetzt werden, bei welcher der Benutzer durch eine entsprechende Eingabe, z. B. während des Aufwärmvorganges, das System anvisiert, eine erreichte Temperatur zu halten. In diesem Fall kann sogar auf eine Temperatureichung verzichtet werden, da der Benutzer bei Erreichen der gewünschten Temperatur die Haltefunktion aktiviert und das System lediglich die zum Aktivierungszeitpunkt aktuelle Resonanzfrequenz über einen Regelungsmechanismus halten muss, ohne dass die dieser Frequenz zugrunde liegende absolute Temperatur des Warmhaltegeschirrs dem System bekannt sein muss.

Wie bereits erwähnt, sind bevorzugt mehrere über das Warmhaltefeld verteilte Temperatursensoren vorgesehen. Eine solche Anordnung trägt der Tatsache Rechnung, dass das Warmhaltegeschirr kleiner sein kann als das Warmhaltefeld und das Geschirr daher nur einen Teilbereich des Warmhaltefeldes bedeckt. In einem solchen Fall liegt jedoch wenigstens einer der Temperatursensoren unterhalb des Warmhaltegeschirrs und erfasst somit auch die Warmhaltetemperatur desselbigen. Über entsprechende Steuerungsmittel kann der entsprechende Temperatursensor, welcher tatsächlich eine Warmhaltetemperatur misst, eruiert und ausgewählt und dessen Temperaturmesswerte zur Regelung der Warmhaltetemperatur verwendet werden.

Bevorzugt geschieht die Regelung der Warmhaltetemperatur über die Steuerungsmittel der Leistungs- und Steuerungseinheit. Dies trägt der, dem erfindungsgemässen Warmhaltesystem zugrunde liegende Philosophie Rechnung, dass möglichst viele Aufgaben des Warmhaltesystems zentral in der Leistungs- und Steuerungseinheit zusammengefasst werden sollen. In diesem Fall werden die Temperaturmesswerte oder die zur Berechnung der Temperaturen erfassten Ausgangswerte über die Datenleitungen an die Leistungs- und Steuerungseinheit übermittelt. Steuerungsbefehle, z. B. zum Schalten der elektronischen Schalter, sofern diese nicht in die Leistungs- und Steuerungseinheit untergebracht sind, werden ebenfalls über die Datenleitung übermittelt. Die Ist-Werte der Temperaturmesswerte könne über die nachfolgend beschriebene Anzeigeeinheit auf einem Display angezeigt werden. Ferner können die Sollwerttemperaturen durch die ebenfalls nachfolgend beschriebene Eingabeeinheit vom Benutzer eingegeben werden.

Die Steuerungsmittel der Leistungs- und Steuerungseinheit sind bevorzugt zur individuellen oder zonenweisen Regelung der Warmhaltetemperaturen an den Induktionswarmhaltegeräten ausgelegt. Zonenweise bedeutet, dass mehrere Induktionswarmhaltegeräte regelungstechnisch eine gemeinsame Warmhaltezone ausbilden, in welcher die dazugehörigen Geräte auf dieselbe Warmhaltetemperatur geregelt werden.

Das Warmhaltesystem enthält bevorzugt wenigstens eine Anzeige und-/oder Eingabeeinheit zur Anzeige von Parametern, wie z. B. aktuelle Warmhaltetemperatur, Solltemperatur, etc. und/oder zur Eingabe von Daten, wie Steuerbefehle, z. B. Ein- oder Ausschalten eines Induktionswarmhaltegerätes oder von Parametern, wie Solltemperatur, Warmhaltezeit, etc. Die wenigstens eine Anzeige- und/oder Eingabeeinheit ist jedoch bevorzugt im Bereich des Warmhaltesystems angeordnet. Ist nur eine Anzeige- und/oder Eingabeeinheit vorgesehen, so kann diese physisch in die Leistungs- und Steuerungseinheit integriert sein oder physisch unabhängig ausgebildet sein. Es kann auch vorgesehen sein, dass zusätzlich oder alternativ zur vorgenannten Anordnung, jedes Warmhaltegerät eine eigene Anzeige- und/oder Eingabeeinheit aufweist, z. B. zur lokalen Anzeige der Warmhaltetemperatur. Diese Einheit ist z. B. in das jeweilige Warmhaltegerät integriert.

Im Weiteren können eine oder mehrere Bedieneinheiten, über welche die Induktionswarmhaltegeräte durch den Benutzer individuell ein- oder ausgeschaltet werden können, vorgesehen sein. Bevorzugt ist für jedes Induktionswarmhaltegerät eine separate Bedieneinheit vorgesehen. Die Bedieneinheit umfasst insbesondere einen Schalter. Die Bedieneinheiten können physisch unabhängig ausgebildet sein oder physisch in die Leistungs- und Steuerungseinheit bzw. die Anzeige- und/oder Eingabeeinheit oder in die einzelnen Induktionswarmhaltegeräte integriert sein.

In einer Weiterentwicklung der Erfindung kann eine zentrale Anzeige- und/oder Eingabeeinrichtung zur Anzeige von Kennzahlen, wie aktuelle Warmhaltetemperatur der einzelnen Induktionswarmhaltegeräten, Status der Induktionswarmhaltegeräte, etc. und/oder zur Eingabe von Steuerdaten, wie Ein- oder Ausschalten von Warmhaltegeräte oder Eingabe von Solltemperaturen enthalten. Die Anzeige- und/oder Eingabeeinrichtung ist, wie auch allfällig physisch unabhängig ausgebildete Anzeige- und/oder Eingabeeinheiten, über eine entsprechende Datenleitung, z. B. über einen Datenbus, wie CAN-Bus, und Anschlussschnittstelle mit der Leistungs- und Steuerungseinheit verbunden. Die Anzeige- und/oder Eingabeeinrichtung umfasst z. B. ein Display und einen Mikroprozessor. Sie kann beispielsweise ein herkömmlicher Computer sein. Die Anzeige- und/oder Eingabeeinrichtung zeichnet sich dadurch aus, dass sie nicht im Bereich des Warmhaltesystems angeordnet ist, sondern sich z. B. in einem anderen Raum befinden kann. Die Anzeige- und/oder Eingabeeinrichtung erlaubt daher die Überwachung des Warmhaltesystems von einem anderen Ort aus. Die Anzeige- und/oder Eingabeeinrichtung kann zusätzlich zur wenigstens einen Anzeige- und/oder Eingabeeinheit vorgesehen sein oder dieser entsprechen.

In Weiterbildung der Erfindung enthält die Leistungs- und Steuerungseinheit bzw. deren Leistungssteller:
- einen Netzanschluss, zur Speisung des Leistungsstellers mit einer Netzwechselspannung;
- einen Gleichrichter zur Erzeugung einer Gleichspannung aus der Netzwechselspannung;
- einen gemeinsamen Gleichspannungszwischenkreis zur Speisung einer gemeinsamen Leistungsstufe; und
- eine gemeinsame Leistungsstufe, über welche die Induktionswarmhaltegeräte mit Leistung in einer bestimmten Schaltfrequenz versorgt werden.

Die Leistungsstufe ist über Steuerungsmittel, z. B. der Leistungs- und Steuerungseinheit, ansteuerbar. Im Anschluss an die Leistungsstufe, d.h. zwischen der Leistungsstufe in der Leistungs- und Steuerungseinheit und der oder den Induktionsspulen in der Induktionswarmhaltegeräten ist jeweils für jedes Induktionswarmhaltegerät, wie bereits erwähnt, ein elektronischer Schalter zum individuellen Zuschalten oder Wegschalten der Leistungsversorgung zu den Induktionsspulen der Induktionswarmhaltegeräten vorgesehen. Der elektronische Schalter kann ein Relais, wie Halbleiterrelais, oder ein Transistor sein. Die elektronischen Schalter sind bevorzugt ebenfalls in der Leistungs- und Steuerungseinheit enthalten. Die Schalter können jedoch auch in den einzelnen Induktionswarmhaltegeräten angeordnet sein.

Zusätzlich kann der Induktionsschwingkreis jeweils auch ein variables Schaltungselement, wie z. B. eine steuerbare Drossel, enthalten, mittels welcher die Abgabeleistung des Schwingkreises an das Warmhaltegeschirr gesteuert werden kann. Eine solche Drossel wird z. B. über Gleichstrom gesteuert. Das variable Schaltungselement ist z. B. jeweils im Induktionswarmhaltegerät angeordnet. Ein derartiges variables Schaltungselement wird z. B. in der Schweizer Patentanmeldung Nr. 00652/10 vom 30.04.2010 beschrieben.

Die Leistungsstufe kann z. B. mit 300 V Gleichstrom aus einem Gleichstromzwischenkreis gespiesen werden. Die Leistungsstufe ist z. B. zur Abgabe einer Gesamtleistung von 3200 W ausgelegt. Diese 3200 W teilen sich bei vier angeschlossenen Warmhaltegeräten auf eine Leistung von je 800 W pro Warmhaltegerät auf. In der Leistungs- und Steuerungseinheit können Mittel vorgesehen sein, welche die Leistungsabgabe der Leistungsstufe in Abhängigkeit von einerseits der Anzahl angeschlossenen Induktionswarmhaltegeräten steuert und andererseits die Leistungszufuhr in Abhängigkeit von den jeweiligen Schaltzuständen der einzelnen, den Geräten zugeordneten elektronischen Schaltern regelt.

Die Erfindung betrifft ebenfalls eine Leistungs- und Steuerungseinheit, geeignet für den Einsatz in einem modularen Induktionswarmhaltesystem bzw. Induktionswarmhalteeinrichtung wie oben beschrieben. Die Leistungs- und Steuerungseinheit enthält einen gemeinsamen Leistungssteller und eine Mehrzahl von Anschlussschnittstellen für den individuellen Anschluss und die individuelle Ansteuerung von Induktionswarmhaltegeräten wie oben und nachfolgend beschrieben.

Die Erfindung betrifft ferner ein Induktionswarmhaltegerät, geeignet für den Einsatz in einem modularen Induktionswarmhaltesystem wie oben beschrieben. Das Induktionswarmhaltegerät bildet ein Warmhaltefeld aus, welches wenigstens eine Induktionsspule als Teil eines Induktionsschwingkreises zur Erzeugung eines magnetischen Wechselfeldes zwecks Erwärmung eines auf dem Warmhaltefeld platzierten Geschirrs enthält. Das Induktionswarmhaltegerät weist eine Anschlussschnittstelle für den Anschluss einer Leistungs- und Steuerungseinheit der oben beschriebenen Art auf.

Für ein reibungsloses Funktionieren des erfindungsgemässen Warmhaltesystems ist entsprechend geeignetes Warmhaltegeschirr mit ferromagnetischen Eigenschaften einzusetzen. Das Warmhaltegeschirr ist entsprechend auf das erfindungsgemässe Warmhaltesystem auszulegen und kann somit auch als Teil des Warmhaltesystems betrachtet werden. Ein bevorzugtes Warmhaltegeschirr besteht aus beschichtetem Aluminium, insbesondere Gussaluminium. Das Giessverfahren kann z. B. ein Kokillengiessverfahren sein. Der Aluminiumgrundkörper ist wenigstens auf seiner Aussenfläche, teil- oder vollflächig beschichtet. Die Beschichtung ist insbesondere im Auflagebereich, d.h. am Boden, des Geschirrs aufgebracht. Die Beschichtung umfasst Bestandteile mit ferromagnetischen Eigenschaften, so dass auch der für Induktionsanwendungen wenig geeignete Werkstoff Aluminium für diese Anwendung eingesetzt werden kann. Die gute Wärmleitfähigkeit des Aluminiums gewährleistet einen optimalen Wärmeeintrag in die Speisen.

### WEGE ZUR AUSFÜHRUNG DER ERFINDUNG

Im Folgenden wird der Erfindungsgegenstand anhand von bevorzugten Ausführungsbeispielen, welche in den beiliegenden Figuren dargestellt sind, näher erläutert. Es zeigen jeweils:
- Figur 1: eine schematische Darstellung eines erfindungsgemässen Induktionswarmhaltegeräts;
- Figur 2: eine schematische Darstellung eines erfindungsgemässen Induktionswarmhaltesystems;
- Figur 3: eine schematische Anordnung von erfindungsgemässen Induktionswarmhaltegeräten in Draufsicht;
- Figur 4: eine Schaltungsanordnung eines erfindungsgemässen Induktionswarmhaltesystems.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

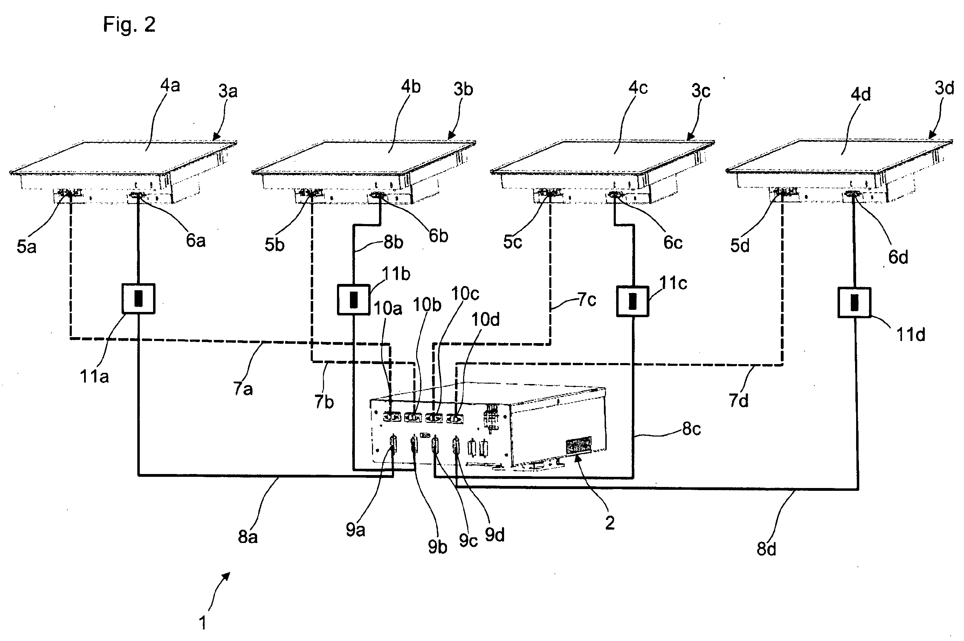

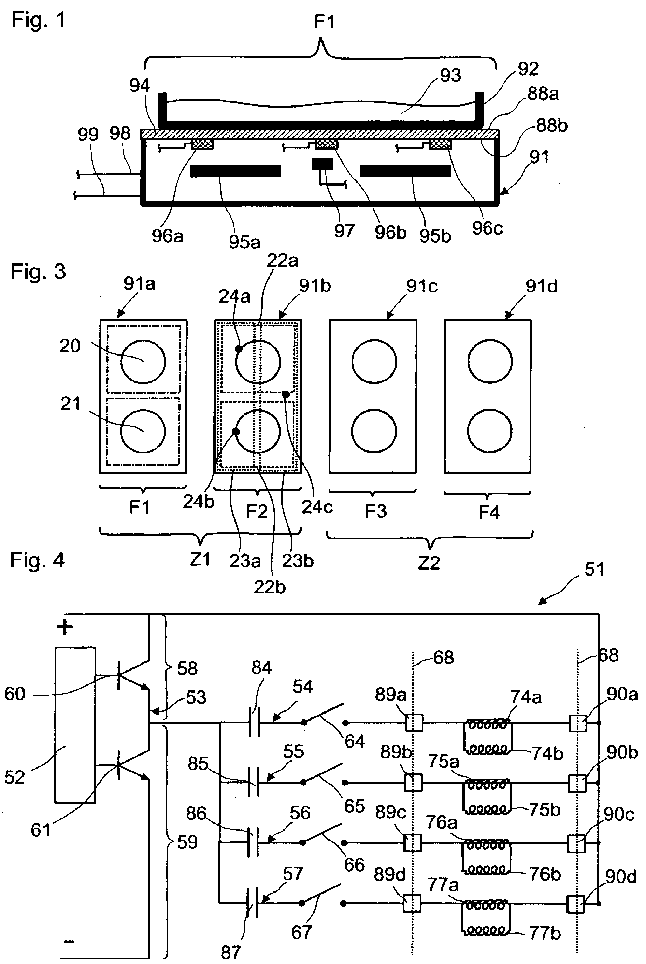

Die **Figur 1** zeigt eine mögliche Ausführungsform eines Induktionswarmhaltegerätes 91. Dieses ist über eine Versorgungsleitung 98 mit der Leistungsstufe einer zentralen Leistungs- und Steuerungseinheit verbindbar. Ferner weist das Induktionswarmhaltegerät eine Datenleitung 99 auf, über welche das Gerät 91 ebenfalls mit einer zentralen Leistungs- und Steuerungseinheit verbindbar ist. Die Anordnung von Induktionswarmhaltegeräten und Leistungs- und Steuerungseinheit wird nachfolgend zu Figur 2 näher erläutert.

Das Induktionswarmhaltegerät 91 umfasst eine Elektronikbaugruppe mit, in vorliegender Ausführung zwei nebeneinander angeordneten Induktionsspulen 95a..b. Da das Warmhaltefeld (siehe auch Figur 3) rechteckförmig ist, wird mit zwei Induktionsspulen 95a..b einen gleichmässigeren Wärmeeintrag in das Warmhaltegeschirr 92 erreicht. Das Induktionswarmhaltegerät 91 enthält ein flächiges Auflageelement 94, welches z. B. eine Ceran-Glasplatte ist. Auf seiner Oberseite 88a bildet es ein rechteckförmiges Warmhaltefeld F1 aus. Das Warmhaltefeld F1 definiert die Einsatzfläche, welche zum Warmhalten von Speisen 93 mit dem Warmhaltegeschirr 92 belegt werden kann. Das Induktionswarmhaltegerät 91 bildet ein Warmhaltefeld F1 aus. Da die Induktionswarmhaltegeräte 91, 91a, 91b, 91c, 91d gemäss Figur 1 und 3 rechteckförmig mit zwei Induktionsspulen 95a, 95b; 20, 21 ausgebildet sind, können grössere, rechteckförmige Behältnisse, welche das gesamte Warmhaltefeld F1 belegen und sich daher über beide Induktionsspulen 95a, 95b; 20, 21 erstrecken, eingesetzt werden. Andererseits können aber auch kleinere Behältnisse, welche nur etwa die Hälfte des Warmhaltefeldes F1 belegen über eine der beiden Induktionsspulen mit Heizleistung versorgt werden.

An die Unterseite 88b des Auflageelementes 94 sind drei über das Warmhaltefeld verteilte Temperatursensoren 96a..c; 24a..c angebracht. Diese Messen die Temperatur der Unterseite 88b des Auflageelementes 94. Optional kann eine Messeinrichtung mit einer Induktionsmessspule 97 vorgesehen sein, mittels welcher die Resonanzfrequenz des dazugehörigen Warmhaltegeschirrs 92 zu Zwecken der Temperatursteuerung, wie weiter oben erläutert, ermittelt werden kann.

In **Figur 2** ist eine Ausführung eines erfindungsgemässen modularen Induktionswarmhaltesystems 1 dargestellt. Das Warmhaltesystem 1 umfasst eine gemeinsame Leistungs- und Steuerungseinheit 2 sowie vier über die Leistungs- und Steuerungseinheit 2 betriebene Induktionswarmhaltegeräte 3a..d. Jedes Induktionswarmhaltegeräte 3a..d bildet ein Warmhaltefeld 4a..b aus, welches z. B. durch ein Auflageelement, wie eine Ceran-Glasplatte, begrenzt wird. Die Leistungs- und Steuerungseinheit 2 enthält vier Anschlussschnittstellen 10a..d für Versorgungsleitungen 7a..d sowie vier Anschlussschnittstellen 9a..d für Datenleitungen 8a..d. Die Datenleitungen 8a..d können serielle Verbindungen, z. B. Datenbusverbindungen, sein. Die einzelnen Induktionswarmhaltegeräte 3a..d enthalten ebenfalls eine entsprechende Anschlussschnittstelle 5a..d für die Versorgungsleitung 7a..d zur Leistungsversorgung sowie eine Anschlussschnittstelle 6a..d für die Datenleitung 8a..d für die Datenübermittlung. Jedes angeschlossene Induktionswarmhaltegerät 3a..d kann über einen diesem zugeordneten Schalter 11 a..d vom Benutzer einzeln an- oder abgeschaltet werden. Die Schalter 11 a..d können von der Leistungs- und Steuerungseinheit 2 physisch unabhängig ausgebildet oder in die Leistungs- und Steuerungseinheit 2 integriert sein. Grundsätzlich enthält das erfindungsgemässe System bevorzugt eine Anzeigeund/oder Eingabeeinheit (nicht dargestellt), über welche Daten, wie Temperatursollwerte oder Steuerbefehle, eingegeben und/oder angezeigt werden können. Die Schalter können in die Anzeige- und/oder Eingabeeinheit integriert sein, so dass die Induktionswarmhaltegeräte über diese einzeln an- und ausgeschaltet werden können. Die Anzeige- und/oder Eingabeeinheit kann z. B. ein Display enthalten. Die Anzeigeund/oder Eingabeeinheit kann physisch in die Leistungs- und Steuerungseinheit integriert oder von dieser physisch unabhängig sein. Die Anzeige- und/oder Eingabeeinheit ist mit der Leistungs- und Steuerungseinheit über eine Datenleitung verbunden. Die Leistungs- und Steuerungseinheit kann vom Benutzer bevorzugt über die Anzeige- und/oder Eingabeeinheit gesteuert, konfiguriert und/oder mit Parametern, wie Solltemperaturen, Warmhaltezeiten etc., gespiesen werden.

Die Versorgungs- und Datenleitungen müssen nicht zwingend über separate Leitungen und Anschlussschnittstellen geführt werden. Sie können auch für jedes Induktionswarmhaltegerät in einem gemeinsamen Leitungsstrang und/oder in einem gemeinsamen Steckanschluss physisch zusammengefasst sein. Ferner kann die Leistungs- und Steuerungseinheit auch mehr oder weniger als vier, vorzugsweise zwei oder mehr, Anschlussschnittstellen für Induktionswarmhaltegeräte aufweisen. Entsprechend können am Leistungs- und Steuerungseinheit entsprechend der Anzahl Anschlussschnittstellen auch mehr oder weniger als vier, vorzugsweise zwei oder mehr, Induktionswarmhaltegeräte angeschlossen werden. Selbstverständlich brauchen nicht sämtliche Anschlussschnittstellen belegt zu sein. D.h. es können auch weniger Induktionswarmhaltegeräte angeschlossen werden, als die Leistungs- und Steuerungseinheit Anschlussschnittstellen aufweist. Dies stellt gerade einen grossen Vorteil des erfindungsgemässen modularen Systems dar. Es brauchen nur diejenige Anzahl Induktionswarmhaltegeräte angeschlossen zu werden, welche auch tatsächlich, z. B. in einem Buffetbetrieb, benötigt werden. Dadurch kann wertvoller Platz eingespart werden, indem sich keine unbenutzten Warmhaltekapazitäten im Buffetbereich befinden.

Die Induktionswarmhaltegeräte 3a..d, die Leistungs- und Steuerungseinheit 2, sowie die Schalter 11a..d und die Anzeige- und/oder Eingabeeinheit können in einen selbsttragenden Einrichtungskörper, welcher z. B. als Möbel, wie Anrichte, ausgestaltet ist, eingelassen sein. Das erfindungsgemässe Warmhaltesystem weist allgemein eine hohe Flexibilität in der Ausgestaltung eines Buffets auf und stellt eine vergleichsweise einfache Einbaulösung dar. Das Warmhaltesystem kann natürlich auch als allein stehende Lösung ausgelegt sein.

In Figur 3 ist ein schematische Anordnung von vier Induktionswarmhaltegeräten 91a..d dargestellt, welche von einer gemeinsamen Leistungs- und Steuerungseinheit mit Leistung gespiesen und angesteuert werden (nicht gezeigt). Jedes Induktionswarmhaltegerät 91a..d bildet wie oben erläutert jeweils ein Warmhaltefeld F1, F2, F3, F4 aus (hier rechteckförmig dargestellt), welche jeweils über zwei Induktionsspulen 20, 21 mit Wärmeleistung versorgt werden (hier nur beim Feld F1 explizit bezeichnet). Die Induktionsspulen 20, 21 sind im vorliegenden Beispiel rund, d.h. kreisförmig, ausgebildet. Sie können jedoch auch rechteckförmig und insbesondere rechteckförmig und flächendeckend ausgebildet sein. D.h. die Spulen sind insbesondere an die Form des Warmhaltefeldes angepasst. Sie können z. B. quadratisch ausgebildet sein. Im Warmhaltefeld F1 der Figur 3 ist eine solche rechteckförmige Spule zur Veranschaulichung mit einer strich-punktierten Linie eingezeichnet. Die obigen Ausführungen zur Form der Spule sind natürlich nicht auf vorliegendes Ausführungsbeispiel beschränkt.

Im vorliegenden Beispiel bilden jeweils zwei Induktionswarmhaltegeräte 91a..b; 91c..d eine gemeinsame Warmhaltezone Z1 bzw. Z2 aus. Eine Warmhaltezone Z1 bzw. Z2 zeichnet sich dadurch aus, dass sämtliche Warmhaltefelder F1, F2 bzw. F3, F4, welche dieser Zone Z1 bzw. Z2 angehören, auf dieselbe Warmhaltetemperatur gesteuert werden. Die Speisen bzw. das Warmhaltegeschirr einer Warmhaltezone werden also auf dieselbe Temperatur eingeregelt. Das vorliegende Ausführungsbeispiel nach Figur 3 bietet also zwei Warmhaltezonen Z1, Z2 mit zwei verschiedenen Warmhaltetemperaturen an.

Das Induktionswarmhaltegerät 91 b zeigt ferner eine mögliche Verteilung von drei Temperatursensoren 24a..c über das Warmhaltefeld. Die drei Temperatursensoren 24a..c spannen im vorliegenden Beispiel ein Dreieck auf. Das Dreieck ist so in das Warmhaltefeld gelegt, dass wenn man das recheckförmige Feld in Längsrichtung in zwei Hälften unterteilt oder quer dazu in zwei Hälften unterteilt, immer wenigstens ein Temperatursensor 24a..c in einer der Feldhälften liegt. Damit kann Warmhaltegeschirr verwendet werden, welches z. B. in Längsrichtung des Feldes jeweils nur eine Hälfte des Feldes belegt (siehe Geschirr 23a..b), oder in Querrichtung nur die Hälfte des Feldes belegt (siehe Geschirr 22a..b). Unabhängig von der konkreten Anzahl und Anordnung der Temperatursensoren ist es wichtig, dass für jede der oben genannten Unterteilung in zwei Hälften jeweils wenigstens ein Temperatursensor in einer der Feldhälften liegt.

**Figur 4** zeigt eine Ausführungsform einer Schaltanordnung 51 für ein erfindungsgemässes Induktionswarmhaltesystem mit gemeinsamen Leistungssteller und mehreren Induktionswarmhaltegeräten. Die Induktionswarmhaltegeräte beziehen ihre Leistung von einer gemeinsamen, zentralen Leistungsstufe 53. Die Leistungsstufe 53 umfasst zwei Brückenzweige 58, 59. Ein Brückenzweig 58 bzw. 59 beinhaltet jeweils einen Transistor und eine ihm zugeordnete Freilaufdiode, jeweils gemeinsam mit 60 bzw. 61 bezeichnet. Nicht eingezeichnet ist eine Gleichspannungsquelle, typischerweise eine Gleichrichterschaltung, welche die Brückenschaltung speist. Die individuelle Induktionsschwingkreis-Elektronik 54, 55, 56, 57 für die einzelnen Warmhaltegeräte wird über dieselbe Brückenschaltung mit einer einheitlichen Schaltfrequenz gespiesen. Zwecks Zu- und Wegschalten der Induktionsschwingkreis-Elektronik 54, 55, 56, 57 einzelner Warmhaltegeräte ist jede Induktionsschwingkreis-Elektronik 54, 55, 56, 57 zwischen der Induktionsspule 74a, 74b; 75a, 75b; 76a, 76b; 77a, 77b und der Leistungsstufe 53 ein elektronischer Schalter 64, 65, 66, 67, insbesondere ein Relais, zugeordnet. Obwohl sämtliche Induktionswarmhaltegeräte über eine gemeinsame Leistungsstufe mit einheitlicher Schaltfrequenz gespiesen werden, können diese nun je nach Bedarf, d.h. je nachdem, ob Wärmeleistung erforderlich ist, mittels den elektronischen Schaltern 64, 65, 66, 67 einzeln zu- oder weggeschaltet werden.

In vorliegender Ausführung umfasst die Induktionsschwingkreis-Elektronik 54, 55, 56, 57 jeweils zwei Induktionsspulen, mittels welchen das Warmhaltefeld, des Induktionswarmhaltegeräts mit Heizleistung versorgt werden kann. Selbstverständlich können auch nur eine oder mehr als zwei Induktionsspulen pro Warmhaltefeld bzw. pro Induktionsschwingkreis vorgesehen sein. Zwischen der Leistungsstufe und dem elektronischen Schalter ist jeweils die Kapazität 84, 85, 86, 87 des dazugehörigen Schwingkreises angeordnet. Diese Kapazität kann jedoch auch andernorts z. B. zwischen dem Relais und der Induktionsspule, angeordnet sein.

Die Schaltanordnung 51 ist physisch auf den Leistungssteller bzw. die Leistungseinheit und die einzelnen Induktionswarmhaltegeräte aufgeteilt. Im vorliegenden Ausführungsbeispiel stellt die Linie 68 schematisch die Trennung zwischen Leistungseinheit und den Induktionswarmhaltegeräten dar. Die Trennung wird durch die ebenfalls schematisch dargestellten Verbindungsschnittstellen 89a..d und 90a..d dargestellt. Die Leistungseinheit beinhaltet hier neben der Leistungsstufe 53 auch die Kapazitäten 84..87 sowie die elektronischen Schalter 64..67. Die Elektronik in den Induktionswarmhaltegeräten ist auf ein Minimum reduziert. Selbstverständlich können die Kapazitäten 84..87 und/oder die elektronischen Schalter 64..67 jeweils auch im dazugehörigen Induktionswarmhaltegerät untergebracht sein. Ferner kann die Polung der Anschlüsse auch umgekehrt sein.

### BEZUGSZEICHENLISTE

- 1: Induktionswarmhaltesystem
- 2: Leistungs- und Steuerungseinheit
- 3a..d: Induktionswarmhaltegerät
- 4a..d: Auflageelement
- 5a..d: Anschlussschnittstelle für die Versorgungsleitungen
- 6a..d: Anschlussschnittstelle für die Datenleitungen
- 7a..d: Versorgungsleitungen
- 8a..d: Datenleitungen
- 9a..d: Anschlussschnittstelle für die Datenleitungen
- 10a..d: Anschlussschnittstelle für die Versorgungsleitungen
- 11a..d: Schalteinheit
- 20: Schwingkreis mit Induktionsspule
- 21: Schwingkreis mit Induktionsspule
- 22a..b: Warmhaltegeschirr
- 23a..b: Warmhaltegeschirr
- 24a..c: Temperatursensor
- 51: Schaltungsanordnung
- 52: Steuerungsmittel
- 53: Leistungsstufe mit Leistungsschalter (Leistungstransistor)
- 54: Induktionsschwingkreis-Elektronik des ersten Warmhaltefeldes F1
- 55: Induktionsschwingkreis-Elektronik des zweiten Warmhaltefeldes F2
- 56: Induktionsschwingkreis-Elektronik des dritten Warmhaltefeldes F3
- 57: Induktionsschwingkreis-Elektronik des vierten Warmhaltefeldes F4
- 58: erster Brückenzweig
- 59: zweiter Brückenzweig
- 60: Transistor mit Freilaufdiode
- 61: Transistor mit Freilaufdiode
- 64: elektronischer Schalter (Transistor, Relais)
- 65: elektronischer Schalter (Transistor, Relais)
- 66: elektronischer Schalter (Transistor, Relais)
- 67: elektronischer Schalter (Transistor, Relais)
- 68a..b: Linie der physischen Trennung zwischen Leistungseinheit und Induktionswarmhaltegeräten
- 74a: erster Schwingkreis mit Induktionsspule
- 74b: zweiter Schwingkreis mit Induktionsspule
- 75a: erster Schwingkreis mit Induktionsspule
- 75b: zweiter Schwingkreis mit Induktionsspule
- 76a: erster Schwingkreis mit Induktionsspule
- 76b: zweiter Schwingkreis mit Induktionsspule
- 77a: erster Schwingkreis mit Induktionsspule
- 77b: zweiter Schwingkreis mit Induktionsspule
- 84: Kapazität des Induktionsschwingkreises
- 85: Kapazität des Induktionsschwingkreises
- 86: Kapazität des Induktionsschwingkreises
- 87: Kapazität des Induktionsschwingkreises
- 88a: Oberseite
- 88b: Unterseite
- 89a..d: Verbindungsanschlüsse
- 90a..d: Verbindungsanschlüsse
- 91: Induktionswarmhaltegerät
- 92: Warmhaltegeschirr
- 93: Speise
- 94: Auflageelement
- 95a..b: Induktionsspule eines Induktionsschwingkreises
- 96a..c: Temperatursensoren
- 97: Messschwingkreis mit Induktionsmessspule
- 98: Versorgungsleitung
- 99: Datenleitung
- F1: Warmhaltefeld 1
- F2: Warmhaltefeld 2
- F3: Warmhaltefeld 3
- F4: Warmhaltefeld 4
- Z1: Temperaturzone 1
- Z2: Temperaturzone 2

## Patentansprüche

1. Modulares Warmhaltesystem (1) zum Warmhalten von Speisen, enthaltend eine Mehrzahl von Induktionswarmhaltegeräten (3a..d), wobei die Induktionswarmhaltegeräte (3a..d) jeweils:
- ein Warmhaltefeld (4a..d) ausbilden;
- wenigstens eine Induktionsspule (95a..b) als Teil eines Induktionsschwingkreises zur Erzeugung eines magnetischen Wechselfeldes zwecks Erwärmung eines auf dem Warmhaltefeld (4a..d) platzierten Warmhaltegeschirrs enthalten,
ferner enthaltend eine gemeinsame Leistungs- und Steuerungseinheit (2), wobei die gemeinsame Leistungs- und Steuerungseinheit (2):
- einen gemeinsamen Leistungssteller und
- eine Mehrzahl von Anschlussschnittstellen (9a..d; 10a..d) für den individuellen Anschluss der Induktionswarmhaltegeräte (3a..d),
enthält,
**dadurch gekennzeichnet, dass**
das Induktionswarmhaltegerät jeweils ein Auflageelement (94) ausbildet, enthaltend eine Oberseite (88a), welche als Auflagefläche für das Warmhaltegeschirr dient, und eine Unterseite (88b), welche der Induktionsspule (95a..b) zugewandt ist, und die Induktionswarmhaltegeräte (3a..d) jeweils wenigstens einen in der Fläche des Warmhaltefeldes jeweils der Unterseite (88b) des Auflageelementes (94) zugewandten Temperatursensor (96a..c) zum Messen der Temperatur des Auflageelementes (94) an dessen Unterseite (88b) enthält,
und die Leistungs- und Steuerungseinheit (2) Auswertemittel zur Auswertung von Temperaturmessdaten der Temperatursensoren (96a..c) an den Induktionswarmhaltegeräten (3a..d) sowie Steuerungsmittel zur individuellen Regelung der Warmhaltetemperaturen an den Induktionswarmhaltegeräten (3a..d) mittels der Temperatursensoren (96a..c) enthält, und die Leistungs- und Steuerungseinheit (2) bzw. deren Leistungssteller eine Leistungsstufe enthält, und im Anschluss an die Leistungsstufe eine Mehrzahl von elektronischen Schalter (64, 65, 66, 67) zum individuellen Zuschalten oder Wegschalten der Leistungsversorgung zu den Induktionsspulen (74a..b, 75a..b; 76a..b, 77a..b) der Induktionswarmhaltegeräte (3a..d) vorgesehen sind.

2. Modulares Warmhaltesystem nach Anspruch 1, wobei die Leistungs- und Steuerungseinheit (2) jeweils erste Anschlussschnittstellen (10a..d) für die individuelle Leistungsversorgung der Induktionswarmhaltegeräte (3a..d) sowie zweite Anschlussschnittstellen (9a..d) für den individuellen Datenaustausch mit den Induktionswarmhaltegeräten (3a..d) enthält.

3. Modulares Warmhaltesystem nach Anspruch 1 oder 2, wobei die ersten und/oder zweiten Anschlussschnittstellen (9a..d; 10a..d) an der Leistungs- und Steuerungseinheit (2) zum lösbaren Anbringen von Verbindungskabeln (8a..d; 7a..d) für die Verbindung zu den Induktionswarmhaltegeräten ausgelegt sind.

4. Modulares Warmhaltesystem nach einem der Ansprüche 1 bis 3, wobei das Warmhaltesystem (1) wenigstens eine zentrale Anzeige- und/oder Eingabeeinrichtung für die angeschlossenen Induktionswarmhaltegeräte (3a..d) zur Anzeige von Kennzahlen der einzelnen Induktionswarmhaltegeräten (3a..d), enthält.

5. Modulares Warmhaltesystem nach Anspruch 4, wobei die Leistungs- und Steuerungseinheit (2) eine Anschlussschnittstelle zur Herstellung einer Datenverbindung mit einer physisch unabhängig ausgebildeten, zentralen Anzeige- und/oder Eingabeeinrichtung enthält.

6. Modulares Warmhaltesystem nach einem der Ansprüche 1 bis 5, wobei die Leistungs- und Steuerungseinheit (2) bzw. deren Leistungssteller:
- einen Netzanschluss, zur Speisung des Leistungsstellers mit einer Netzwechselspannung;
- einen Gleichrichter zur Erzeugung einer Gleichspannung aus der Netzwechselspannung;
- einen gemeinsamen Gleichspannungszwischenkreis zur Speisung einer gemeinsamen Leistungsstufe;
- eine gemeinsame Leistungsstufe, welche über Steuerungsmittel ansteuerbar ist, und über welche die Induktionswarmhaltegeräte mit Leistung versorgt werden;
enthält.

7. Modulares Warmhaltesystem nach Anspruch 1, wobei die Induktionswarmhaltegeräte (3a..d) jeweils einen elektronischen Schalter (64, 65, 66, 67), wie Relais oder Transistor, zum individuellen Zuschalten oder Wegschalten der Leistungsversorgung von der Leistungsstufe zur Induktionsspule (74a..b, 75a..b; 76a..b, 77a..b) aufweist.

8. Modulares Warmhaltesystem nach einem der Ansprüche 1 bis 7, wobei das Warmhaltefeld (4a..d) wenigstens eines Induktionswarmhaltegerätes (3a..d) zwei oder mehrere Induktionsspulen als Teil eines Induktionsschwingkreises zur Erzeugung eines magnetischen Wechselfeldes zwecks Erwärmung eines auf dem Warmhaltefeld platzierten Geschirrs enthält, wobei die Induktionsspulen parallel geschaltet sind.

9. Leistungs- und Steuerungseinheit (2) für den Einsatz in einem modularen Warmhaltesystem (1) nach einem der Ansprüche 1 bis 8, wobei die Leistungs- und Steuerungseinheit (2)
- einen gemeinsamen Leistungssteller und
- eine Mehrzahl von Anschlussschnittstellen (9a..d; 10a..d) für den individuellen Anschluss und die individuelle Ansteuerung von Induktionswarmhaltegeräten (3a..d)
enthält,
**dadurch gekennzeichnet, dass**
die Leistungs- und Steuerungseinheit (2) bzw. deren Leistungssteller eine Leistungsstufe sowie Auswertemittel zur Auswertung von Temperaturmessdaten von Temperatursensoren (96a..c) an den Induktionswarmhaltegeräten (3a..d) und Steuerungsmittel zur individuellen Regelung der Warmhaltetemperaturen an den Induktionswarmhaltegeräten (3a..d) mittels der Temperatursensoren (96a..c) enthält.

10. Induktionswarmhaltegerät (3a..d) für den Einsatz in einem modularen Warmhaltesystem (1) nach einem der Ansprüche 1 bis 8, wobei das Induktionswarmhaltegerät (3a..d)
- ein Warmhaltefeld (4a..d) ausbildet,
- wenigstens eine Induktionsspule (95a..b) als Teil eines Induktionsschwingkreises zur Erzeugung eines magnetischen Wechselfeldes zwecks Erwärmung eines auf dem Warmhaltefeld platzierten Geschirrs enthält,
und das Induktionswarmhaltegerät (3a..d) eine Anschlussschnittstelle (5a..d; 6a..d) für den Anschluss einer Leistungs- und Steuerungseinheit (2) mit einem gemeinsamen Leistungssteller aufweist,
**dadurch gekennzeichnet, dass**
das Induktionswarmhaltegerät (3a..d) ein Auflageelement (94) ausbildet, enthaltend eine Oberseite (88a), welche als Auflagefläche für das Warmhaltegeschirr dient, und eine Unterseite (88b), welche der Induktionsspule (95a..b) zugewandt ist, und das Induktionswarmhaltegerät (3a..d) wenigstens einen in der Fläche des Warmhaltefeldes der Unterseite (88b) des Auflageelementes (94) zugewandten Temperatursensor (96a..c) zum Messen der Temperatur des Auflageelementes (94) an dessen Unterseite (88b) enthält.

## Claims

1. A modular heat-retaining system (1) for keeping food warm, containing a plurality of induction heat-retaining units (3a..d), wherein each of the induction heat-retaining units (3a..d):
- forms a heat-retaining area (4a..d);
- contains at least one induction coil (95a..b) as part of a resonant inductive circuit for generating an alternating magnetic field for purposes of heating a dish to be kept warm placed on the heat-retaining area (4a..d),
further containing a common power and control unit (2), wherein the common power and control unit (2) contains:
- a common power controller and
- a plurality of connection interfaces (9a..d; 10a..d) for the individual connection of the induction heat-retaining units (3a..d),
**characterised in that**
each of the induction heat-retaining unit forms a support element (94) having a top side (88a), which serves as the bearing surface for the dish to be kept warm, and a bottom side (88b), which is facing the induction coil (95a..b),
and each of the induction heat-retaining units (3a..d) contains at least one temperature sensor (96a..c) in the surface of the heat-retaining area, facing the bottom side (88b) of the support element (94), for measuring the temperature of the support element (94) on its bottom side (88b),
and wherein the power and control unit (2) contains evaluating means for the evaluation of temperature measurement data of the temperature sensors (96a..c) on the induction heat-retaining units (3a..d),
and the power and control unit (2) further contains control means, and the control means is designed for the individual regulation of the heat-retaining temperatures on the induction heat-retaining units (3a..d) by means of the temperature sensors (96a..c),
and wherein the power and control unit (2) respectively its power controller contains a power stage, and subsequent to the power stage, there is provided a plurality of electronic switches (64, 65, 66, 67) for the individual connection or disconnection of the power supply to the induction coils (74a..b, 75a..b; 76a..b, 77a..b) of the induction heat-retaining units (3a..d).

2. The modular heat-retaining system according to claim 1, wherein the power and control unit (2) contains first connection interfaces (10a..d) for the individual power supply of the induction heat-retaining units (3a..d) as well as second connection interfaces (9a..d) for the individual data exchange with the induction heat-retaining units (3a..d).

3. The modular heat-retaining system according to claim 1 or 2, wherein the first and/or second connection interfaces (9a..d; 10a..d) are designed on the power and control unit (2) for the detachable plugging of connection cables (8a..d; 7a..d) for the connection to the induction heat-retaining units.

4. The modular heat-retaining system according to one of claims 1 to 3, wherein the heat-retaining system (1) contains at least one central display and/or input means for the connected induction heat-retaining units (3a..d) for the display of indicators of the individual induction heat-retaining units (3a..d).

5. The modular heat-retaining system according to claim 4, wherein the power and control unit (2) contains a connection interface for producing a data connection to a physically independently formed central display and/or input means.

6. The modular heat-retaining system according to one of claims 1 to 5, wherein the power and control unit (2) respectively its power controller contains:
- a mains connection, for supplying the power controller with mains A.C. voltage;
- a rectifier for generating a D.C. voltage from the mains A.C. voltage;
- a common D.C. voltage intermediate circuit for supplying a common power stage;
- a common power stage that is controllable via control means, and by means of which the induction heat-retaining units are supplied with power.

7. The modular heat-retaining system according to claim 1, wherein each of the induction heat-retaining units (3a..d) has an electronic switch (64, 65, 66, 67), such as a relay or a transistor, for the individual connection or disconnection of the power supply from the power stage to the induction coil (74a..b, 75a..b; 76a..b, 77a..b).

8. The modular heat-retaining system according to one of claims 1 to 7, wherein the heat-retaining area (4a..d) of at least one induction heat-retaining unit (3a..d) contains two or more induction coils as part of a resonant inductive circuit for generating an alternating magnetic field for warming a dish placed on the heat-retaining area, the induction coils being connected in parallel.

9. A power and control unit (2) for application in a modular heat-retaining system (1) according to one of claims 1 to 8, wherein the power and control unit (2) contains:
- a common power controller and
- a plurality of connection interfaces (9a..d; 10a..d) for the individual connection and the individual control of induction heat-retaining units (3a..d),
**characterised in that**
the power and control unit (2) respectively its power controller contains a power stage and evaluating means for the evaluation of temperature measurement data of the temperature sensors (96a..c) on the induction heat-retaining units (3a..d),
and the power and control unit (2) further contains control means, and the control means is designed for the individual regulation of the heat-retaining temperatures on the induction heat-retaining units (3a..d) by means of the temperature sensors (96a..c).

10. An induction heat-retaining unit (3a..d) for application in a modular heat-retaining system (1) according to one of claims 1 to 8, wherein the induction heat-retaining unit (3a..d):
- forms a heat-retaining area (4a..d), and
- contains at least one induction coil (95a..b) as part of a resonant inductive circuit for generating an alternating magnetic field for purposes of warming a dish placed on the heat-retaining area,
and wherein the induction heat-retaining unit (3a..d) has a connection interface (5a..d; 6a..d) for the connection to a power and control unit (2) having a common power controller,
**characterised in that**
the induction heat-retaining unit (3a..d) forms a support element (94) having a top side (88a), which serves as the bearing surface for the dish to be kept warm, and a bottom side (88b), which is facing the induction coil (95a..b),
and the heat-retaining unit (3a..d) contains at least one temperature sensor (96a..c) in the surface of the heat-retaining area, facing the bottom side (88b) of the support element (94), for measuring the temperature of the support element (94) on its bottom side (88b).

## Revendications

1. Système modulaire (1) de maintien au chaud d'aliments, contenant plusieurs appareils à induction (3a...d) de maintien au chaud, chacun des appareils à induction (3a...d) de maintien au chaud
formant une surface (4a...d) de maintien au chaud, contenant au moins une bobine d'induction (95a...b) faisant partie d'un circuit oscillant d'induction qui produit un champ magnétique alternatif pour chauffer un ustensile de maintien au chaud placé sur la surface (4a...d) de maintien au chaud et
contenant en outre une unité commune (2) d'alimentation en énergie et de commande, l'unité commune (2) d'alimentation en énergie et de commande contenant :
un régulateur commun d'alimentation en énergie et
plusieurs interfaces de raccordement (9a...d; 10a...d) permettant de raccorder individuellement les appareils à induction (3a...d) de maintien au chaud,
**caractérisé en ce que**
chaque appareil à induction de maintien au chaud forme un élément de pose (94) qui contient une face supérieure (88a) servant de surface de pose de l'ustensile de maintien au chaud et une face inférieure (88b) tournée vers la bobine à induction (95a...b),
et chacun des appareils à induction (3a...d) de maintien au chaud présente dans la surface de maintien au chaud au moins une sonde de température (96a...c) tournée vers la face inférieure (88b) de l'élément de pose (94) et mesurant la température de la face inférieure (88b) de l'élément de pose (94),
et l'unité (2) d'alimentation en énergie et de commande contient des moyens d'évaluation qui permettent d'évaluer des données de mesure de température des sondes de température (96a...c) placées sur les appareils à induction (3a...d) de maintien au chaud ainsi que des moyens de commande qui permettent une régulation individuelle de la température de maintien au chaud des appareils à induction (3a...d) de maintien au chaud au moyen des sondes de température (96a...c),
et l'unité d'alimentation en énergie et de commande (2) ou son régulateur d'alimentation en énergie contient un étage d'alimentation en énergie et
et plusieurs commutateurs électroniques (64, 65, 66, 67) qui permettent le branchement ou le débranchement séparé de l'alimentation en énergie des bobines d'induction (74a...b, 75a...b; 76a...b, 77a...b) des appareils à induction (3a...d) de maintien au chaud, raccordés à l'étage d'alimentation en énergie.

2. Système modulaire de maintien au chaud selon la revendication 1, dans lequel l'unité (2) d'alimentation en énergie et de commande contient des premières interfaces de raccordement (10...d) pour l'alimentation séparée en énergie des appareils à induction (3a...d) de maintien au chaud ainsi que des deuxièmes interfaces de raccordement (9a...d) permettant un échange séparé de données avec les appareils à induction (3a...d) de maintien au chaud.

3. Système modulaire de maintien au chaud selon les revendications 1 ou 2, dans lequel les premières et/ou les deuxièmes interfaces de raccordement (9a...d; 10a...d) prévues sur l'unité (2) d'alimentation en énergie et de commande sont conçues pour le placement libérable de câbles de raccordement (8a...d; 7a...d) permettant le raccordement des appareils à induction de maintien au chaud.

4. Système modulaire de maintien au chaud selon l'une des revendications 1 à 3, dans lequel le système (1) de maintien au chaud contient pour les appareils à induction (3a...d) de maintien au chaud qui y sont raccordés au moins un dispositif central d'affichage et/ou d'introduction permettant l'affichage de chiffres caractéristiques des différents appareils à induction (3a...d) de maintien au chaud.

5. Système modulaire de maintien au chaud selon la revendication 4, dans lequel l'unité (2) d'alimentation en énergie et de commande contient une interface de raccordement permettant d'établir une liaison de données avec un dispositif central d'affichage et/ou d'introduction physiquement indépendant.

6. Système modulaire de maintien au chaud selon l'une des revendications 1 à 5, dans lequel l'unité (2) d'alimentation en énergie et de commande ou ses régulateurs d'alimentation en énergie contiennent :
un raccordement au réseau permettant d'alimenter le régulateur d'alimentation en énergie en une tension alternative du réseau,
un redresseur qui forme une tension continue à partir de la tension alternative du réseau,
un circuit intermédiaire commun à tension continue qui alimente un étage d'alimentation en énergie commun et
un étage d'alimentation en énergie commun qui peut être commandé par des moyens de commande et par lequel les appareils à induction de maintien au chaud sont alimentés en énergie.

7. Système modulaire de maintien au chaud selon la revendication 1, dans lequel chacun des appareils à induction (3a...d) de maintien au chaud présente un commutateur électronique (64, 65, 66, 67), par exemple un relais ou un transistor, permettant de brancher ou de débrancher séparément l'alimentation en énergie de l'étage d'alimentation en énergie vers les bobines d'induction (74a...b, 75a...b; 76a...b, 77a...b).

8. Système modulaire de maintien au chaud selon l'une des revendications 1 à 7, dans lequel la surface (4a...d) de maintien au chaud d'au moins un appareil à induction (3a...d) de maintien au chaud présente deux ou plusieurs bobines d'induction qui font partie d'un circuit oscillant d'induction qui forme un champ magnétique alternatif en vue du chauffage d'un ustensile placé sur la surface de maintien au chaud, les bobines d'induction étant raccordées en parallèle.

9. Unité (2) d'alimentation en énergie et de commande destinée à être utilisée dans un système modulaire (1) de maintien au chaud selon l'une des revendications 1 à 8, l'unité (2) d'alimentation en énergie et de commande contenant :
un régulateur commun d'alimentation en énergie et
plusieurs interfaces de raccordement (9a...d; 10a...d) permettant de raccorder séparément et de commander séparément les appareils à induction (3a...d) de maintien au chaud,
**caractérisée en ce que**
l'unité (2) d'alimentation en énergie et de commande ou ses régulateurs d'alimentation en énergie contiennent un étage d'alimentation en énergie ainsi que des moyens d'évaluation qui permettent d'évaluer des données de mesure de température de sondes de température (96a...c) prévues sur les appareils à induction (3a...d) de maintien au chaud et des moyens de commande qui permettent de réguler séparément les températures de maintien au chaud des appareils à induction (3a...d) de maintien au chaud au moyen des sondes de température (96a...c).

10. Appareil à induction (3a...d) de maintien au chaud destiné à être utilisé dans un système modulaire (1) de maintien au chaud selon l'une des revendications 1 à 8, l'appareil à induction (3a...d) de maintien au chaud
formant une surface (4a...d) de maintien au chaud, contenant au moins une bobine d'induction (95a...b) contenant comme partie d'un circuit oscillant d'induction formant un champ magnétique alternatif en vue du chauffage d'un ustensile placé sur la surface de maintien au chaud,
et l'appareil à induction (3a...d) de maintien au chaud présentant une interface de raccordement (5a...d; 6a...d) permettant de raccorder une unité (2) d'alimentation en énergie et de commande à un régulateur d'alimentation en énergie commun,
**caractérisé en ce que**
l'appareil à induction (3a...d) de maintien au chaud forme un élément de pose (94) qui contient une face supérieure (88a) servant de surface de pose de l'ustensile de maintien au chaud et une face inférieure (88b) tournée vers la bobine à induction (95a...b),
et l'appareil à induction (3a...d) de maintien au chaud présente dans la surface de maintien au chaud au moins une sonde de température (96a...c) tournée vers la face inférieure (88b) de l'élément de pose (94) et mesurant la température de la face inférieure (88b) de l'élément de pose (94).
